# EUROPEAN PATENT APPLICATION

(11) **EP 2 444 840 A1**
(43) Date of publication of application: **25.04.2012**
(21) Application number: 10739720.0
(22) Date of filing: 16.06.2010
(51) Int. Cl.: G02F 1/153

(54) **ELECTROCHROMIC DEVICE AND METHOD FOR PRODUCING SAME**

(30) Priority: 16.06.2009 PT 09104635
(71) Applicant: Ydreams - Informática, S.a., 2825-149 Caparica (PT); Universidade Nova de Lisboa, 1099-085 Lisboa (PT)
(72) Inventor: FERREIRA, Isabel Maria Mercês, P-2815-695 Sobreda (PT); DA COSTA, Cláudia Brito, P-2825-374 Costa de Caparica (PT); FORTUNATO, Elvira Maria Correia, P-2825-114 Caparica (PT); MARTINS, Rodrigo Ferrão de Paiva, P-2829-516 Caparica (PT); HENRIQUES, Inês Domingues da Silva, P-1495-057 Algés (PT)
(74) Representative: Alves Moreira, Pedro
(86) International application number: PCT/PT2010/000024
(87) International publication number: WO 2010/147494

(57) **Abstract**

The present invention relates to electrochromic devices and methods for functionalizing cellulose-based materials, in production and post-production stages, in order to obtain solid-state electrochromic devices. The invention is in the field of electrochemistry. These functionalized cellulose-based materials have typical electrochromic characteristics, specifically the ability of changing its oxidation state, leading to a modification of its physical properties, shown by a color change when submitted to an electric potential difference, being this color change reversible. The color is kept in the absence of any electric stimulus, revealing a memory effect. An example of an electrochromic device of the present invention is comprised of a cellulose-based material, which is soaked with a dispersion of electrochromic inorganic material nanoparticles or with a solution of electrochromic organic molecules, wherein the solution/dispersion contains at least one salt, and is finished by deposition of an electrode in each side of the cellulose-based material, wherein at least one of the electrodes is transparent.

## Description

### FIELD OF INVENTION

The present invention relates to electrochromic devices and methods for functionalizing cellulose-based materials, in production and post-production stages, in order to obtain solid-state electrochromic devices.

The invention is in the field of electrochemistry.

### PRIOR ART

Prior art electrochromic devices are mostly built over glass and plastic substrates, being notably in use in contract building and automobile industry.

The following documents establish the state of the art for this invention:
Document US 2008/0297878 A1 relates to a device that includes a cellulose-based fibrous organic substrate that may function as high-storage, high-contrast and/or high-definition paper. However, structure, means and materials of the device are different from those in this disclosure.

Document CA 1076238 A1 uses a fibrous substrate only as a counter-electrode for electrochromic devices. This counter-electrode is made of fibrous pulp and carbon particles, making a carbon-reinforced fibrous sheet. This counter-electrode is not concomitantly used as substrate, electrochromic and electrolyte element.

Document JP 2007311333 A provides a cellulose separator doped with heavy metals for use in lead batteries. The cellulosic material therein has a different function as compared to the present invention.

Document US 6489051 B1 relates to a cellulosic matrix reinforced with carbon fibers used as a fuel cell current collector. The cellulosic material therein has a different function as compared to the present invention.

Document US 7270880 B2 relates to a device having a plastic substrate and a white-colored screen background due to adsorption of the electrochromic material onto inorganic nanoparticles (Ti02), which are overlayered on a reflective film to enable contrast. The technology and architecture of the electrochromic cells are different from the ones in this invention.

Document US 20070076287 A1 relates to a device in which the substrate is photographic paper, thus coated paper, and the structure is horizontal, i.e., the electrochromic and the counter-electrode are the same material and are placed side by side in the same plane, the electrolyte establishing an ionic bridge between the two. The planar structure of the device is different from that in this invention, and implies that a part of the coloring is always visible, whilst the image is never in a fully transparent state.

### SUMMARY OF THE INVENTION

This invention relates to electrochromic devices and methods for producing electrochromic devices.

In view of the state of the art, this invention makes the construction of an electrochromic device easier, by reducing the number of layers relative to previous state of the art electrochromic devices, and it also makes the construction of an electrochromic device faster and less expensive, by diminishing the number of depositions necessary to achieve the same electrochromic function of the prior art, which was completely unexpected to the expert in the art.

This invention relates to an electrochromic device, characterized by having 3 layers, wherein 2 layers are electrodes and the remaining layer is comprised of a cellulose-based material embedded with a solution/dispersion containing electrochromic, electrolytic and counter-electrode agents, wherein the device changes its color in at least one of its sides by applying electric stimuli, and maintains its color in the absence of electric stimuli.

In one aspect of the invention, at least one of the said electrodes is transparent.

In a further aspect said electrodes are of a material selected from the group consisting of IZO, ITO, FTO, FZO, AZO and ATO.

In a further aspect of the invention, said cellulose-based material is paper.

In still another aspect, said solution/dispersion comprises, as electrochromic agent, nanoparticles from inorganic oxides, nanoparticles from non-oxide inorganic materials, or organic materials, or combinations thereof.

In a further aspect, the inorganic oxide nanoparticles are selected from the group consisting of:
- other metals, selected from the group consisting of SnO, Bi₂O₃ and Pb₃O₄;
- transition metals, selected from the group consisting of WO₃, TiO₂, MoO₃, NiO, V₂O₅, Fe₂O3, Ta₂O₅, CR₂O3, MnO₂, FeO₂, CoO₂, RhO₂, IrO₂ and Nb₂O₅;
- lanthanides, selected from the group consisting of CeO₂, Nd₂O₃, Dy₂O₃, and Eᵣ₂O₃;
- combinations thereof, selected from the group consisting of WO₃-TiO₂, WO₃-TiO₂-MoO₃, CeO₂-TiO₂, CeO₂-SnO₂; and
- polyoxometalates.

In yet a further aspect, the nanoparticles of non-oxide inorganic materials are selected from the group consisting of Prussian blue, β-zirconium chloride-nitride, Tungsten sulphide phosphotungstic acid, Indium nitride, Tin nitride, graphite and metal-doped polymers.

In a further aspect of the invention, the organic materials are selected from the group consisting of:
- conductive polymers, selected from the group consisting of polyanilines and polythiophenes;
- metallophtalocyanines; and
- viologens.

In a further aspect of the invention, the electrochromic device comprises PEDOT:PSS as a conductive polymer.

In yet another aspect said solution/dispersion comprises as electrolytic agent a salt selected from the group consisting of LiClO₄, ZnCl₂, LiBf₄, LiAsF₆, LiT, LiI, LiBr, LiCF₃SO₃, KYF₄, KNO₃, KBrO₃, KI, KBF₄, KOH, KSCN, K₂Cr₂O7, KCI, KCH₃CO₂, NH₄SCN, NH₄CH₃CO₂, NH₄Br, NH₄Cl, NaSCN, NaPF₆ and NaYF₄.

In the device of the invention the solution/dispersion comprises, as electrochromic agent, WO₃ and, as electrolytic agent, LiClO₄.

The present invention still relates to a method for producing electrochromic devices, comprising the steps of:
- immersing a cellulose-based material into a solution/dispersion comprising simultaneously electrochromic, electrolytic and counter-electrode agents;
- drying the cellulose-based material;
- depositing an electrode on each side of the cellulose-based material, wherein at least one electrode is transparent.

In another aspect, said cellulose-based material is paper pulp.

In one aspect, said cellulose-based material is paper.

In another aspect of the invention, said solution/dispersion comprises, as electrochromic agent, nanoparticles of inorganic oxides, nanoparticles of non-oxide inorganic materials or organic materials, or combinations thereof.

In yet another aspect, the nanoparticles of inorganic oxides are selected from the group consisting of:
- other metals, selected from the group consisting of SnO, Bi₂O₃ and PB₃O₄;
- transition metals, selected from the group consisting of WO₃, TiO₂, MoO₃, NiO, V₂O₅, Fe₂O₃, Ta₂O₅, CR₂O₃, MnO₂, FeO₂, CoO₂, RhO₂, IRO₂ and Nb₂Os;
- lanthanides, selected from the group consisting of CeO₂, Nd₂O₃, DyO₃ and Er₂O₃;
- combinations thereof, selected from the group consisting of WO₃-TiO₂, WO₃-TiO₂-MoO₃, CeO₂-TiO₂, CeO₂-SnO₂; and
- polyoxometalates.

In a further aspect of the invention, the nanoparticles of non-oxide inorganic materials are selected from the group consisting of Prussian blue, β-zirconium chloride-nitride, Tungsten sulphide, phosphotungstic acid, Indium nitride, Tin nitride, graphite and metallic polymers.

In yet another aspect, the organic materials are selected from the group consisting of:
- conductive polymers, selected from the group consisting of polyanilines and polythiophenes;
- metallophtalocyanines; and
- viologens.

In a further aspect of the invention, the method comprises PEDOT:PSS as conductive polymer.

In a further aspect, the solution/dispersion comprises as electrolytic agent, a salt selected from the group consisting of LiClO₄, ZnCl₂, LiBf₄, LiAsF₆, LiT, LiI, LiBr, LiCF₃SO₃, KYF₄, KNO₃, KBrO₃, KI, KBF₄, KOH, KSCN, K₂Cr₂O₇, KCI, KCH₃CO₂, NH₄SCN, NH₄CH₃CO2_{,} NH₄Br, NH₄Cl, NaSCN, NAPF₆ and NAYF_{4.}

In a further aspect of the invention, the electrodes are made of a material selected from the group consisting of IZO, ITO, FTO, FZO, AZO and ATO.

In yet another aspect of the invention, the solution/dispersion comprises, as electrochromic agent, WO₃, and as electrolytic agent LiClO₄.

### BRIEF DESCRIPTION OF THE DRAWINGS

The invention is further described below by disclosing preferential, non-limiting embodiments in reference to the annexed drawing, wherein:

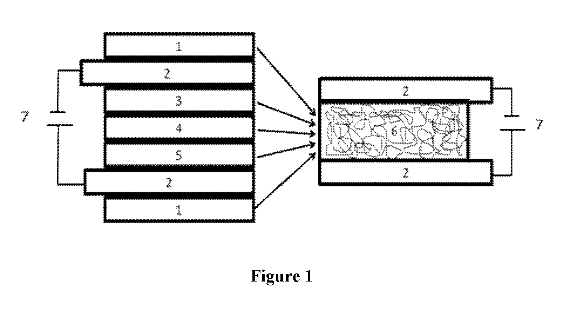

Figure 1 shows a schematic representation of an electrochromic structure comprised in the state of the art, on the left-hand side, and an exemplary structure of this invention, on the right side, showing a reduction from 5 to 1 layer.

### DETAILED DESCRIPTION OF THE INVENTION

The present invention consists in functionalizing cellulose-based materials for electrochromic applications, by employing an electrochromic solution/dispersion and its modification in order to have internal electrolytic properties, and in the use of the resulting solution/dispersion for activating the fibrous matrix of the cellulose-based materials, rendering them with electrochromic and electrolytic properties, reducing the deposition of layers over one, or between two, substrates (1), as comprised in the state of the art (see Fig. 1).

In the device of the present invention, the functionalized cellulose-based material displays, *per se,* 4 distinct functions comprised in the state of the art: electrochromic cells:
- 1. substrate, partially or fully supporting an electrochromic device;
- 2. electrochromic, changing color with the application of electric potential;
- 3. electrolytic, facilitating charge compensation through ionic migration, as a result of the application of electric potential; and
- 4. counter-electrode, functioning as redox pair of the electrochromic function.

Alternatively, the cellulose-based material can be functionalized by employing a solution/dispersion having electrolytic properties only, exhibiting 2 functions:
- 1. substrate, partially or fully supporting an electrochromic device;
- 2. electrolytic, facilitating charge compensation through ionic migration, as a result of application of electric potential.

In this case, in order to have functional electrochromic device, the electrochromic material is deposited in one of the sides of the functionalized cellulose-based material, and the counter-electrode is deposited in the opposite side of the cellulose-based material.

Electrochromic material (3) is understood to be a compound that, in the presence of electrical stimulus changes its oxidation state resulting in a modification of its physical properties, shown by a color change, which is kept even in the absence of any electrical stimulus, due to a memory effect, being such a modification reversible.

According to one aspect of the present invention, the electrochromic solution/dispersion of the present invention can consist of:
- inorganic materials, selected from the group consisting of the following classes:
   - oxides:
      - other metals, e.g. SnO, Bi₂O₃, Pb₃O₄;
      - transition metals, e.g. WO₃, TiO₂, MoO₃, NiO, V₂O₅, Fe₂O₃, Ta₂O₅, Cr₂O₃, MnO₂, FeO₂, CoO₂, RhO₂, IrO₂, Nb₂O₅;
      - lanthanides, e.g. CeO₂, NdO₃, DyO₃, ErO₃;
      - or combinations thereof, e.g. WO₃-TiO₂, WO₃-TiO₂, MoO₃, CeO₂-TiO₂, CeO₂-SnO₂;
      - polyoxometalates, e.g. polyoxotungstates; and
   - non-oxides, e.g. Prussian blue, β-zirconium chloride-nitride; Tungsten sulphide, phosphotungstic acid, Indium nitride, Tin nitride, graphite, metal-doped polymers; and
- organic materials, selected from the group consisting of the following classes:
   - conductive polymers, e.g. polyanilines and polythiophenes such as PEDOT:PSS;
   - metallophtalocyanines; and
   - viologens.

The electrochromic devices also require the presence of an electrolytic material, ionically conductive (4). This material operates the compensation of charges in the process of oxidation or reduction of the electrochromic material, through the migration of ionic species.

According to another aspect of the present invention, to the electrochromic solution/dispersion, is added a salt selected from the group consisting of LiClO₄, ZnCl₂, LiBf₄, LiAsF₆, LiT, LiI, LiBr, LiCF₃SO₃, KYF₄, KNO₃, KBrO₃, KI, KBF₄, KOH, KSCN, K₂Cr₂O₇, KCI, KCH₃CO₂, NH₄SCN, NH₄CH₃CO₃, NH₄Br, NH₄Cl, NaSCN, NaPF₆, and NaYF₄ in order to achieve the electrolytic function.

In prior art, electrochromic devices further include a layer of counter-electrode, also named ion storage layer (5). These substances act as the REDOX pair (reduction-oxidation) of the electrochromic material, since they are reduced when the electrochromic material oxidizes and vice-versa.

According to another aspect of the present invention, the electrochromic material is also the counter-electrode, resulting in a color change on one side of the cellulose-based material being inverse to the color change on the other side, in accordance with the polarity of the applied electric potential difference.

The present invention also employs two electrodes, of which at least one is transparent (2), which allow the application of electric potential.

The electrodes are connected to an external power source through which a difference of electric potential is applied to the device. Upon applying this electric potential difference, the electrochromic material is oxidized on one of its sides and reduced on the other side. Simultaneously, the ions from the salt migrate through the cellulosic matrix, performing charge compensation. By reversing the polarity of the applied electric potential, the same phenomenon occurs conversely in relation to the sides of the electrochromic material. Coloring is thus alternately displayed on the sides of the device as a result of the polarity of the applied electric potential.

In a preferred embodiment of the present invention, sheets of cellulosic material are immersed in an electrochromic solution/dispersion containing at least one salt, rendering it amendable to act as substrate, electrochromical, electrolytical and counter-electrode (6). The sheets are dried and then an electrode is applied to each side of the sheet, being at least one of the applied electrodes transparent.

The sheet electrodes are connected to an external power source through which an electric potential is applied. Upon applying this electric potential difference, oxidation (loss of electrons) of the electrochromic material occurs in a first side of the sheet, and reduction (gain of electrons) of the electrochromic material occurs in a second side of the sheet. Simultaneously, the ions from the salt migrate through the cellulosic matrix to compensate charges. By reversing the polarity of the applied electric potential, oxidation of the electrode on the second side of the sheet occurs, and reduction of the electrode on the first side of the sheet occurs. Coloring is thus achieved alternately in the sides of the sheet as a result of the polarity of the applied electric potential.

In another preferred embodiment of the present invention, an electrochromic device is developed from a paper sheet, with a dispersion of Tungsten trioxide (WO₃) and Lithium perchlorate (LiClO₄) nanoparticles. No pre-treatment or cleaning of the paper is required. It is only required to have a substrate with suitable porosity, which was verified in advance. The sheet is fully immersed in the above-described dispersion/solution for 1-10 minutes. Next, the sheet is dried at 60-100 °C for 1-5 minutes. A transparent conductive oxide: IZO - Indium Zinc Oxide, ITO - Indium Tin Oxide, FTO - Fluorine-doped Tin Oxide, FZO - Fluorine-doped Zinc Oxide, AZO - Aluminum-doped Zinc Oxide, or ATO - Aluminum-doped Tin Oxide, is deposited on both sides of the paper. It is thus obtained a functional electrochromic device which, excluding the power source, is made of 3 layers only.

In another preferred embodiment of the present invention, an electrochromic solution/dispersion and at least one salt are added to the paper pulp in the additivation stage of the production process, immediately prior to the stages of drying and pressing. Once the production process is completed, an electrode is deposited on each of the sides of the produced paper sheets, being at least one electrode transparent.

In another preferred embodiment of the present invention, the solution/dispersion can be merely electrolytic, acting the cellulose-base material as substrate and electrolyte only, and its functioning further requiring the deposition of the electrochromic and counter-electrode materials in opposite sides of the cellulose-based material, in addiction to both electrodes.

Although the active function of the cellulosic materials foreseen in the present invention is the electrochromic function, it may happen that other forms of chromism, including thermochromism, photocromism, solvatochromism, ionochromism, halochromism, tribochromism, and piezochromism are observed.

The above preferred embodiments are presented as illustrations of this disclosure, and should not be construed as limiting the scope of this disclosure. Other aspects and forms of implementation illustrative of the present invention will be obvious to experts in the art from this disclosure and/or from practice of this disclosure.

## Claims

1. Electrochromic device comprising 3 layers, wherein 2 layers are electrodes and the remaining layer comprises a cellulose-based material embedded with a solution/dispersion containing electrochromic, electrolytic and counter-electrode agents, wherein the electrochromic device changes color in at least one of its sides in the presence of electric stimulus and maintains color in the absence of electric stimulus.

2. Electrochromic device according to claim 1, wherein at least one of said electrodes is transparent.

3. Device according to claim 1, wherein the electrodes are of a material selected from the group consisting of IZO, ITO, FTO, FZO, AZO and ATO.

4. Electrochromic device according to claim 1, wherein said cellulose-based material is paper.

5. Device according to claim 1, wherein said solution/dispersion comprises, as electrochromic agent, nanoparticles of inorganic oxides, nanoparticles of non-oxide inorganic materials or nanoparticles of organic materials, or combinations thereof.

6. Device according to claim 5, wherein the nanoparticles of inorganic oxides are selected from the group consisting of:
- other metals, selected from the group consisting of SnO, Bi₂O₃ and Pb₃O₄;
- transition metals, selected from the group consisting of WO₃, TiO₂, MoO₃, NiO, V₂O₅, Fe₂O₃, Ta₂O₅, Cr₂O₃, MnO₂, FeO₂, CoO₂, RhO₂, IrO₂ and Nb₂O₅,
- lanthanides, selected from the group consisting of CeO₂, Nd₂O₃, Dy₂O₃ and Er₂O₃;
- combinations thereof, selected from the group consisting of WO₃-TiO₂, WO₃-TiO₂-MoO₃, CeO₂-TiO₂, CeO₂-SnO₂; and
- polyoxometalates.

7. Device according to claim 5, wherein the nanoparticles of non-oxide inorganic materials are selected from the group consisting of Prussian blue, β-zirconium chloride-nitride, Tungsten sulphide, phosphotungstic acid, Indium nitride, Tin nitride, graphite and metallic polymers.

8. Device according to claim 5, wherein the organic materials are selected from the group consisting of:
- conductive polymers, selected from the group consisting of polyanilines and polythiophenes;
- metallophtalocyanines; and
- viologens.

9. Device according to the preceding claim, comprising PEDOT:PSS as conductive polymer.

10. Device, according to claim 1, wherein the solution/dispersion includes as electrochromic agent a salt selected from the group consisting of LiClO₄, ZnCl₂, LiBf₄, LiAsF₆, LiT, LiBr, LiCF₃SO₃, KYF₄, KNO₃, KBrO₃, KI, KBF₄, KOH, KSCN, K₂Cr₂O₇, KCI, KCH₃CO₂, NH4_{S}CN, NH₄CH₃CO₂, NH₄Br, NH₄Cl, NaSCN, NaPF₆ and NaYF₄.

11. Device according to claim 1, wherein the solution/dispersion comprises, as electrochromic agent WO₃ and as electrolytic agent LiClO₄.

12. Method for producing electrochromic devices as described in the preceding claims, comprising the steps of:
- immersing a cellulose-based material into a solution/dispersion comprising simultaneously electrochromic, electrolytic and counter-electrode agents;
- drying of the cellulose-based material;
- depositing of an electrode in each side of the cellulose-based material, wherein at least one electrode is transparent.

13. Method according to claim 12, wherein said cellulose-based material is paper pulp.

14. Method according to claim 12, wherein said cellulose-based material is paper.

15. Method according to claim 12, wherein the solution/dispersion comprises as electrochromic agent nanoparticles of inorganic oxides, nanoparticles of non-oxide inorganic materials, nanoparticles of organic materials, or combinations thereof.

16. Method according to claim 15, wherein the nanoparticles of inorganic oxides are selected from the group consisting of:
- other metals, selected from the group consisting of SnO, Bi₂O₃ and Pb₃O₄;
- transition metals, selected from the group consisting of WO₃, TiO₂, MoO₃, NiO, V₂O₅, Fe₂O₃, Ta₂O₅, Cr₂O₃, MnO₂, FeO₂, CoO₂, RhO₂, IrO₂ and Nb₂O₅,
- lanthanides, selected from the group consisting of CeO₂, Nd₂O₃, Dy₂O₃ and Er₂O₃;
- combinations thereof, selected from the group consisting of WO₃-TiO₂, WO₃-TiO₂-MoO₃, CeO₂-TiO₂, CeO₂-SnO₂; and
- polyoxometalates.

17. Method according to claim 15, wherein the nanoparticles of non-oxide inorganic materials are selected from the group consisting of Prussian blue, β-zirconium chloride-nitride, Tungsten sulphide, phosphotungstic acid, Indium nitride, Tin nitride, graphite and metal-doped polymers.

18. Method according to claim 15, wherein the organic materials are selected from the group consisting of:
- conductive polymers, selected from the group consisting of polyanilines and polythiophenes;
- metallophtalocyanines; and
- viologens.

19. Method according to the preceding claim comprising PEDOT:PSS as conductive polymer.

20. Method according to claim 12, wherein the solution/dispersion comprises as electrolytic agent a salt selected from the group consisting of LiClO₄, ZnCl₂, LiBf₄, LiAsF₆, LiT, LiI, LiBr, LiCF₃SO₃, KYF₄, KNO₃, KBrO₃, KI, KBF₄, KOH, KSCN, K₂Cr₂O₇, KCI, KCH₃CO₂, NH₄SCN, NH₄CH₃CO₂, NH₄Br, NH₄Cl, NaSCN, NaPF₆ and NaYF₄.

21. Method according to claim 12, wherein the electrodes are made of a material from the group consisting of IZO, ITO, FTO, FZO, AZO and ATO.

22. Method, according to claim 12, wherein the solution/dispersion comprises, as electrochromic agent, WO₃ and, as electrolytic agent, LiClO₄.
